# EUROPEAN PATENT APPLICATION

(11) **EP 2 975 572 A1**
(43) Date of publication of application: **20.01.2016**
(21) Application number: 14765751.4
(22) Date of filing: 06.03.2014
(51) Int. Cl.: G06Q 50/10

(54) **REMAINING DATA PROCESSING SYSTEM**

(30) Priority: 11.03.2013 JP 2013067363
(71) Applicant: Kenmochi, Shoji, Fujisawa-shi, Kanagawa 251-0023 (JP); Ouchi, Hidetsugu, Tokyo 104-0045 (JP); Tanada, Nobuko, Kunigami-gun, Okinawa 904-0411 (JP)
(72) Inventor: KUSUNOKI Hiroshi, Kunigami-gun, Okinawa 904-0411 (JP)
(74) Representative: Reichert & Lindner Partnerschaft Patentanwälte
(86) International application number: PCT/JP2014/055770
(87) International publication number: WO 2014/141996

(57) **Abstract**

A remaining data processing system (1) has a storage device (6), an editing unit (9), a receiving unit (5) and a transmitting unit (10), and is communicably coupled with a personal data management system (4) of a financial organization etc. and with a data management system (11) for managing a remaining data. The storage device (6) stores a living request (7) before death that describes how to process the remaining data. The unit (5) receives, from the system (4), a notice of death of a user, a notice of certification of care need of the user, an identifier of the user and data certificating a sender. The unit (9) creates an instruction (8) for instructing the system (11) to process the remaining data based on the living request. The unit (10) transmits the instruction to the system (11) or makes the system (11) perform processing described in the instruction (8).

## Description

### TECHNICAL FIELD

The present invention relates to a remaining data management system receiving, from a personal data management system of financial organizations such as an insurance company, a bank and a securities firm, a funeral company or a public office, a notice of death of a user, a notice of certification of care need of the user, an identifier of the user and transmitting, to a data management system managing data to be deleted after death of contractor, an instruction for instructing the data management system to process the remaining data based on a living request pre-received by the contractor.

### BACKGROUND ART

There are some prior arts of a computer system wherein an insurance company manages a message from a contractor or an assured person to a beneficiary of insurance money. For example, the patent literature 1 discloses a system that transmits the message to the beneficiary at the timing of an event such as coming-of age ceremony during growth process of the beneficiary. The patent literature 2 discloses a massage management system that processes the stored message in accordance with a contract situation (ex. payment of insurance money, end of contract).

These systems can transmit or show the message entrusted to the insurance company to the message receiver such as the pre-determined beneficiary of insurance money at the pre-determined timing of event such as coming-of-age ceremony or in accordance with contract situation. The system can also delete the message at the timing. The invention of the patent literature 2 can transmit, for each pre-determined period, "a question mail" to a person having entrusted the message. The mail confirms whether the person is still alive. However, there is no system that instructs an outside system keeping remaining data after death to process the remaining data in pre-determined way (ex. deleting the remaining data) at the timing of death of contractor or certification of care need on behalf of the dead contractor.

### PRIOR ART DOCUMENTS

### PATENT LITERATURES

Patent literature 1: JP 3895321 B
Patent literature 2: JP 4427091 B

### SUMMARY OF THE INVENTION

### PROBLEM TO BE SOLVED BY THE INVENTION

The systems of the patent literatures 1 and 2 can transmit or delete the message from the contractor or the assured person to the beneficiary at the timing of the event or in accordance with the contract situation.

The systems of the patent literatures 1 and 2 are based on the precondition that it is easy for the insurance company keeping the message to contact with the message receiver (the beneficiary). When the contractor having entrusted the message dies, the message receiver has incentive to demand or receive a large amount of insurance money. Therefore, the message receiver actively informs the insurance company keeping the message that the contractor dies.

However, the systems of the patent literatures 1 and 2 only transmit the message. Therefore, a system has been sought by which the contractor can instruct an outside system keeping the remaining data to process the remaining data after death of the contractor in pre-determined way (ex. delete the data) using information of death of the user (information received by an insurance company, a bank, a securities firm or a funeral ceremony company).

The first reason why such a system is sought is that the system can prevent a third party from browsing and using the remaining data indefinitely. The second reason is that the system can prevent a third party from using a false identity of the deceased and causing an economical damage under the name of the deceased or his family. In the field of personal service via internet ever-expending now, it is not clearly defined how to treat data of commercial account or trading after death of the user. In other words, the remaining data may be used illegally after the death of the user. The system can resolve such a problem (by deleting the remaining data within a pre-determined period after the death of the user.)

### MEANS TO SOLVE THE PROBLEM

The invention of claim 1 is a remaining data processing system for processing remaining data regarding a user after death of the user or after certification of care need of the user. The remaining data processing system has a storage device, an editing unit, a receiving unit and a transmitting unit and is communicably coupled with a personal data management system of financial organizations including a bank or a securities firm, a funeral company or a public office, and coupled with a data management system managing the remaining data.
The storage device stores a living request before death describing how to process the remaining data. The receiving unit receives from the personal data management system a notice of death of the user, a notice of the certification of care need of the user, an identifier of the user and data certificating a sender. The editing unit creates an instruction for instructing the data management system to process the remaining data based on the living request. The transmitting unit transmits the instruction to the data management system or making the data management system perform processing described in the instruction.

These configurations enable the system to instruct, on behalf of the user, an outside system managing the remaining data to process the remaining data in way pre-determined by the user at the timing of the death or certification of care need of the user. Hereinafter, "the remaining data processing system" is shortly called "the system" and "financial organizations including a bank or a securities firm, a funeral company or a public office" are shortly called "financial organization etc."

In the invention of claim 2, the data management system is at least one of a system managing received and transmitted data of electronic mail, a system performing or storing a trade and an SNS system that can be browsed via internet.

These configurations enable the system to instruct an outside system managing the remaining data, such as electric mails, accounts, commercial records and SNS used by the user, to process the remaining data in way pre-determined by the user at the timing of the death or certification of care need of the user.

In the invention of claim 3, how to process the remaining data is deleting the remaining data.

These configurations enable the system to instruct, on behalf of the dead user, an outside system managing the remaining data to delete the remaining data at the timing of the death or certification of care need of the user.

In the invention of claim 4, deleting the remaining data is theoretically deleting the remaining data within a pre-determined period and physically deleting the remaining data after the period.

These configurations enable the data management system to delete theoretically the remaining data and save the backup data within the pre-determined period. In the period, the data management system confirms whether the notice of death of the user or the notice of the certification of care need of the user is an error. When the data management system confirms that the notice is an error, the data management system can restore the deleted remaining data using the backup data. After the period, the data management system deletes perfectly the backup data and no longer has to keep the remaining data.

In the invention of claim 5, the transmitting unit transmits to a terminal device of the user a billing price decided in accordance with a period for storing the living request.

These configurations enable the system to charge a cost for preparing the requested process in accordance with the length of requested period, even if it is impossible to estimate when the user dies or when the certification of care need of the user occurs.

In the invention of claim 6, the notice of death is at least one of a fact of death, a receipt data of death, a receipt data of succession, a payment data of death insurance and an information indicating the start of a funeral ceremony.

These configurations enable the system to instruct an enterprise keeping data of the user to delete or publish the data, in response to information from financial organization etc. that the user died.

In the invention of claim 7, the identifier of the user is at least one of a name of the user, a number of insurance policy, an account number, a date of birth, a residential address, a legal address, an address of electric mail and a telephone number.

These configurations enable the system to identify the remaining data stored in the data management system using minimal personal data when the transmitting unit transmits the instruction to the data management system. Briefly, the system does not have to transmit unnecessary personal data. For example, only electrical mail account or address has to be transmitted to the data management system receiving and transmitting the electrical mail.

In the invention of claim 8, the transmitting unit transmits to the terminal device concrete candidates of how to process the remaining data. The receiving unit receives from the terminal device a result selected by the user from the concrete candidates.

These configurations enable the system to present concretely to the user how to process the remaining data. The user can select a desired process from the presented candidates.

In the invention of claim 9, the transmitting unit searches the data management system storing the remaining data of the user based on a pre-determined data described in the living request and transmits the living request to the searched data management system.

These configurations enable the system to find the remaining data in the data management system, even if the user forgets or does not know the remaining data.

In the invention of claim 10, there is a plurality of personal data management systems. The storage device stores what personal data management system stores data of what user. The receiving unit receives from one of the personal data management systems the notice of death of the user, the notice of the certification of care need of the user and the identifier of the user. The transmitting unit transmits the living request to all the personal data management systems that store data of the user corresponding to the received identifier.

These configurations enable the financial organization etc. to share a notice of death of the user or a notice of the certification of care need of the user with the others. Accordingly, the financial organization etc. can know early that the financial organization etc. keeps data of the user and avoid a searching error caused by using internet.

### EFFECT OF THE INVENTION

In the field of personal service via internet ever-expending now, it is not clearly defined how to treat data of commercial account or trading after death of the user. In other words, the remaining data may be used illegally after the death of the user by one having no relation to the user. The system can resolve such a problem (by deleting the remaining data within a pre-determined period after the death of the user.)

For each user, the system can instruct, on behalf of the user, the data management system keeping the remaining data used by user before death of the user, to process the remaining data in way pre-determined by the user at the timing of the death of the user or the certification of care need of the user. The system also can prevent a third party from browsing and using the remaining data indefinitely, from using a false identity of the deceased and from causing an economical damage under the name of the deceased or his family. Additionally, the user can determine, before the death, to give the family his commercial records (evidences) in order to avoid such a problem caused by the fact that whether the trade has been done by the user is unclear. Accordingly, the system prevents the data management system from keeping the remaining data without returning it to the family because of no information about a true intention of the user.

### BRIEF DESCRIPTION OF THE DRAWINGS

FIG.1 illustrates a block diagram of the remaining data processing system.
FIG. 2 is a flowchart illustrating a sequence of the processings by the remaining data processing system for the remaining data, in case of death or certification of care need of the user.
FIG. 3 illustrates an example of the living request.
FIG. 4 illustrates an example of the instruction.

### EMBODIMENTS FOR CARRYING OUT THE INVENTION

### (The first embodiment)

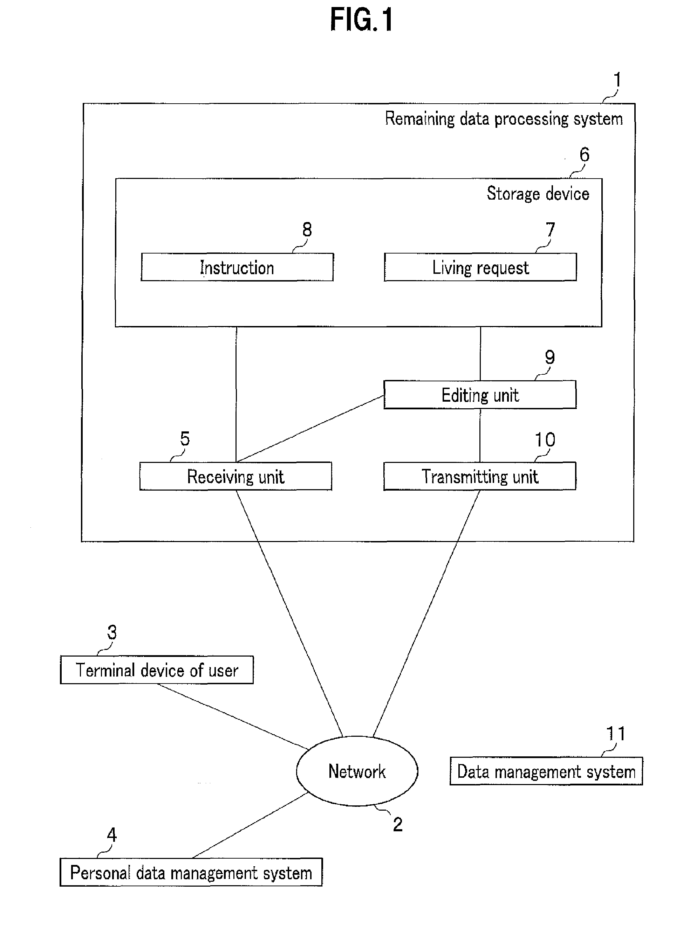

One embodiment of the present invention is described in detail as below. FIG. 1 illustrates a block diagram of the remaining data processing system.

In FIG. 1, a storage device 6 of a remaining data processing system 1 ("the system 1") stores a living request 7. The living request 7 stores a processing for a remaining data associated with an identifier of a data management system 11. The identifier identifies the data management system 11 used by a user. The remaining data refers to data left by the user before his death. The processing refers to any processing for the remaining data. The processing is pre-determined by the user before his death. The processing for the remaining data is performed after the death or a certification of care need of the user.

The data management system 11 can be, for example, a system managing electronic mail data, a system managing trade data and a SNS system browsed via a network such as internet. The data management system 11 stores the remaining data.

The personal data management system 4 is operated by a financial organization etc. The personal data management system 4 obtains, through its ordinary business, information indicating that the user died or the user receives an official certification of care need. Hereinafter, this information is called "a notice."

The system 1 requests previously the personal data management system 4 to transmit to the system 1 the notice, data certificating the sender and personal data corresponding to the notice, as soon as the personal data management system 4 receives the notice.

The personal data management system 4 transmits to the system 1 the notice etc., and the system 1 receives from the personal data management system 4 the notice etc. Then, the system 1 identifies the data management system 11 described in the living request corresponding to the received notice, and requests the identified data management system 11 to process the remaining data.

If a life insurance company operates the personal data management system 4, the personal data management system 4 can obtain information about a payment of death insurance money. If a bank or a securities firm operates the personal data management system 4, the personal data management system 4 accepts a succession for account of the deposit asset. If a funeral company or a public office operates the personal data management system 4, the personal data management system 4, accepts a death registration or a funeral ceremony request from the family.

The system 1 has the receiving unit 5, the transmitting unit 10, the storage device 6 and the editing unit 9. The receiving unit 5 and the transmitting unit 10 are coupled with a network 2 such as internet. A terminal device 3 of user, the personal data management system 4 and data management system 11 are coupled with the network 2. The storage device 6 stores the living request 7 and the instruction 8.

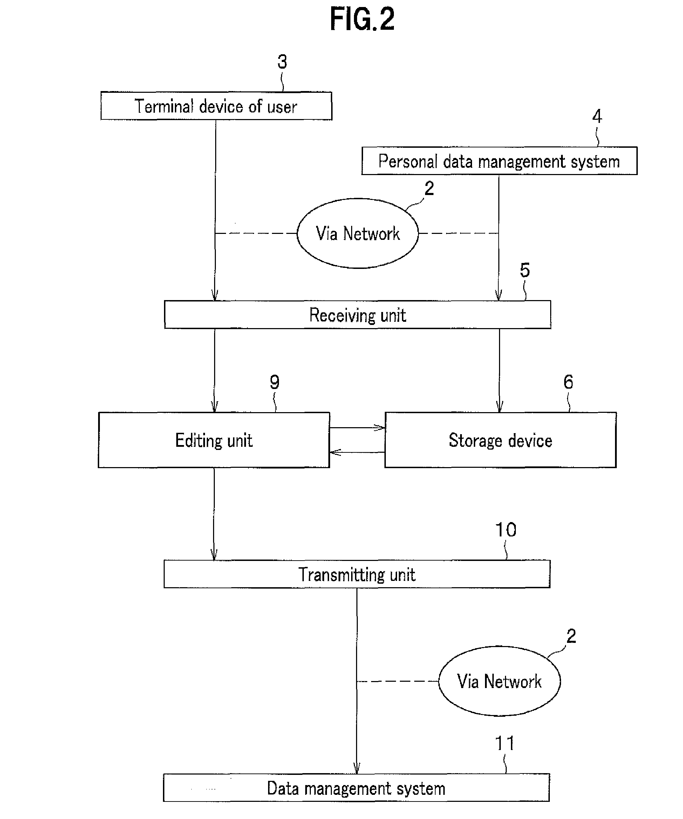

FIG. 2 is a flowchart illustrating a sequence of the processings by the remaining data processing system for the remaining data.

Firstly, the terminal device 3 of the user transmits the living request 7 to the system 1 via network 2 such as internet. Then, the receiving unit 5 of the system 1 stores the received living request 7 in the storage device 6.

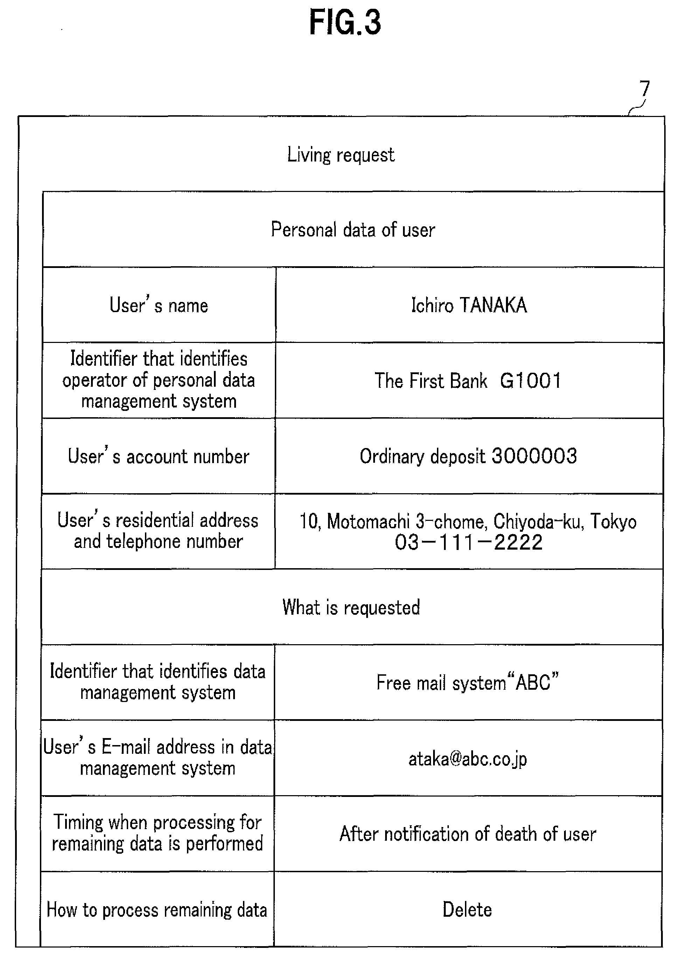

FIG. 3 illustrates an example of the living request 7. The living request stores:
- an identifier that identifies an operator of the personal data management system 4 (name of organization),
- an identifier that identifies the user (at least one from name of the user, a number of insurance policy, an account number, a date of birth, a residential address, a legal address, an address of electric mail and a telephone number),
- a timing when the processing for the remaining data is performed,
- how to process the remaining data and
- an identifier that identifies that identifies the data management system 11.

In FIG. 2, after receiving the notice, the personal data management system 4 transmits to the system 1 the notice, personal data about the user and data certificating a sender via network 2 such as internet.
The receiving unit 5 of the system 1 receives the notice etc. and determines whether the received data certificating a sender matches data indicating one of the organizations under contract. If "yes," the receiving unit 5 passes the received notice to the editing unit 9.
The editing unit 9 searches a living request 7 stored in the storage device 6, based on the received personal data. The editing unit 9 determines whether the notice corresponds to the searched living request 7. If "yes", the editing unit 9 edits, for each data management system 11, minimal data needed by the data management system 11 described in the living request 7.

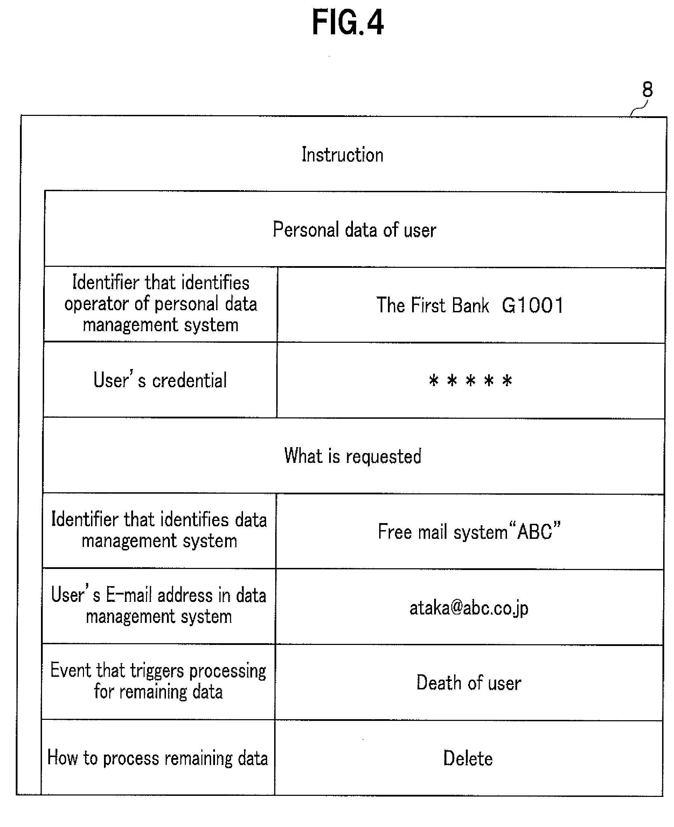

The minimal data refers to the minimal data with which the data management system 11 can identify the user. The data management system 11 may identify the use by using only electronic mail address or account. In such a case that the user is anonymous, the editing unit 9 only has to edit the living request 7 so that the living request 7 includes only the electronic mail address identifying the user and what is the request. It reduces the risk of transmitting unnecessary data, even if it is after death. An example of the edited living request 7 is illustrated as instruction 8 in FIG. 4. If the operator of the system 1 and the operator of the data management system 11 agree on what is described in the instruction 8, it is more convenient. What is described in the instruction 8 may be as same as what is described in the living request 7. In this case, the editing unit 9 does not have to edit the living request 7. The notice of the certification of care need may include "a class." The notice of the death does not include the class. The editing unit 9 may determine whether the editing unit 9 creates the instruction 8 by determining whether the class in the notice matches the class described in the living request 7.

In FIG. 2, then, the editing unit 9 passes the edited instruction 8 to the transmitting unit 10. The transmitting unit 10 transmits the instruction 8 to the data management system 11 described in the instruction 8 via network 2 or a storage medium. The transmitting unit 10 stores the transmitted instruction 8 in the storage device 6.
The data management system 11 receives the instruction 8 and automatically performs the processing described in the instruction 8.

### (The second embodiment)

The system 1 receives the living request 7 from the user and continues to store the living request 7. In other words, during this storing period, the system 1 is keeping the promise that the system 1 will perform the processing described in the living request 7 at the timing of the death of the user or the certification of care need of the user. Because the period may be long, it is preferable to charge the storing fee in accordance with the length of period. The operator of the personal data management system 4 often keeps the asset of the user as part of the ordinary trade with the user. The operator can receive the living request 7 as a service related to the trade and withhold the storing fee from the asset of the asset.

Therefore, the system 1 calculates the storing fee of the living request 7 in accordance with the storing period and demands the storing fee to the user or charges the storing fee to a credit card of the user. The system 1 may demand the calculated storing fee to the operator of the personal data management system 4 designated by the user. The system 1 may request the operator of the personal data management system 4 to withhold the storing fee from the asset of the user.

### (The third embodiment)

As mentioned above, the system 1 receives the living request 7 from the user and continues to store the living request 7. Only a certified lawyer may be authorized to receive the living request 7. In this case, the system 1 may be interlocked or cooperated with an information system operated by the certified lawyer. The certified lawyer himself may operate the system 1.

### (The fourth embodiment)

The system 1 searches the living request 7 via network 2 by using as key word a specific condition, such as name, date of birth, electronic mail address or account, residential address, legal address of the user and combination of them. Then, the system 1 finds a data management system 11 storing data matching the key word and transmits the living request 7 to the found data management system 11. In this way, even if the user forgets, or does not know, what data management system 11 stores the remaining data, the system 1 can find the data management system 11 storing the remaining data to perform the processing pre-determined by the user.

### (The fifth embodiment)

The system 1 stores what organizations etc. has data related to what user. The system 1 receives both the identifier of the user and the notice from a personal data management system 4. Then, the system 1 transmits the living request 7 of the user to all personal data management systems 4 keeping data related to the user.

This allows all operators of the personal data management systems 4 to share the same data related to the user. Each operator can know early that his client (user) died or received a certification of care need and can avoid a searching error caused by using internet. Additionally, each operator can process the remaining data of his client in way pre-determined by his client. This prevents, for example, a bank or a securities company from continue to keep the asset or the trade data of the user without knowing that the user died. This also allows the bank or the securities company to know that his client dies or received a certification of care need. This also facilitates access to the remaining data that could not be searched via network such as internet.

### AVAILABILITY

The present invention can be applied to a mobile device such a mobile telephone and a personal digital assistant, to a personal computer and to a server or a terminal devise coupled with a main frame.

### EXPLANATION OF REFERENCES

- 1: a remaining data processing system ("the system")
- 2: network
- 3: a terminal device of user
- 4: a personal data management system
- 5: a receiving unit
- 6: a storage device
- 7: a living request
- 8: an instruction
- 9: an editing unit
- 10: a transmitting unit
- 11: a data management system

## Claims

1. A remaining data processing system for processing remaining data regarding a user after death of the user or after certification of care need of the user, the remaining data processing system having a storage device, an editing unit, a receiving unit and a transmitting unit,
the remaining data processing system being communicably coupled with a personal data management system of financial organizations including a bank or a securities firm, a funeral company or a public office, and coupled with a data management system managing the remaining data,
the storage device storing a living request before death describing how to process a remaining data,
the receiving unit receiving from the personal data management system a notice of death of the user, a notice of the certification of care need of the user, an identifier of the user and data certificating a sender,
the editing unit creating an instruction for instructing the data management system to process the remaining data based on the living request,
the transmitting unit transmitting the instruction to the data management system or making the data management system perform processing described in the instruction.

2. The remaining data processing system of claim 1, wherein the data management system is at least one of
a system managing received and transmitted data of electronic mail,
a system performing or storing a trade and
an SNS system that can be browsed via internet.

3. The remaining data processing system of claim 2, wherein how to process the remaining data is deleting the remaining data.

4. The remaining data processing system of claim 3, wherein deleting the remaining data is theoretically deleting the remaining data within a pre-determined period and physically deleting the remaining data after the period.

5. The remaining data processing system of claim 4, wherein the transmitting unit transmits to a terminal device of the user a billing price decided in accordance with a period for storing the living request.

6. The remaining data processing system of claim 5, wherein the notice of death is at least one of:
a fact of death,
a receipt data of death,
a receipt data of succession,
a payment data of death insurance and
an information indicating start of a funeral ceremony.

7. The remaining data processing system of claim 6, wherein the identifier of the user is at least one of:
a name of the user,
a number of insurance policy,
an account number,
a date of birth,
a residential address,
a legal address
an address of electric mail and
a telephone number.

8. The remaining data processing system of claim 7, wherein the transmitting unit transmits to the terminal device concrete candidates of how to process the remaining data and the receiving unit receives from the terminal device a result selected by the user from the concrete candidates.

9. The remaining data processing system of claim 8, wherein the transmitting unit searches the data management system storing the remaining data of the user based on a pre-determined data described in the living request and transmits the living request to the searched data management system.

10. The remaining data processing system of claim 9, wherein there is a plurality of personal data management systems,
the storage device stores what personal data management system stores data of what user,
the receiving unit receives from one of the personal data management systems the notice of death of the user, the notice of the certification of care need of the user and the identifier of the user,
the transmitting unit transmits the living request to all the personal data management systems that store data of the user corresponding to the received identifier.
